# EUROPEAN PATENT SPECIFICATION

(11) **EP 0 492 780 B1**
(45) Date of publication and mention of the grant of the patent: **24.07.1996**
(21) Application number: 91309792.9
(22) Date of filing: 23.10.1991
(51) Int. Cl.: F16L 19/02

(54) **Rotary joint for connecting a hose to a pipe**
Drehbare Verbindung zum Anschluss eines Schlauches an ein Rohr
Raccord rotatif pour la connexion d'un tuyau souple à tuyau rigide

(30) Priority: 28.12.1990 FI 906454
(43) Date of publication of application: 01.07.1992
(73) Proprietor: ORAS OY, 26101 Rauma (FI)
(72) Inventor: Saarisalo, Risto Antero, SF-27260 Kuolimaa (FI); Koppanen, Jorma Tapani, SF-26660 Rauma (FI)
(74) Representative: Carpmael, John William Maurice

(56) References cited:
- FR-A- 1 274 276
- FR-A- 2 567 242
- US-A- 4 691 944
- US-A- 4 875 711

## Description

This invention relates to a pipe with a rotary joint, by means of which, for instance, the hose of a hand shower or a washing brush is connected to a faucet outlet pipe.

In prior art solutions, the hose of a hand shower or a washing brush is screwed onto a threaded brass member on the faucet, the member being welded to a branched pipe starting from the faucet. Another generally used manner is a crimped joint, for instance "kuterlite". These joints have the drawback of being expensive as well as non-rotatory, and they should preferably be mounted in advance.

In US-A-4875711, a pipe with a rotary joint is disclosed in which the pipe is formed with a flange at its free end, and the joint comprises a socket member which has a reduced diameter portion which embraces the pipe, there being an O-ring located between this portion and the pipe flange. The socket member has a plurality of "free walls" at its end remote from the reduced diameter portion which are resiliently deformable in a radial direction, to allow an internal circumferential slot in a threaded connector body to be engaged with radially projecting lands on each free wall, by radially deforming each free wall inwardly, and then allowing them to inter-engage, due to the resiliency of the free walls. In use, the O-ring forms a seal between the flange and reduced diameter portion of the socket member. As is clearly apparent from the drawings and description, the reduced diameter portion of the socket member ensures that the socket member can only be located on the pipe from the end thereof remote from the flange unless the flange is formed after location of the socket member on the pipe. This has its drawbacks.

The joint according to the present invention eliminates these drawbacks. With the pipe joint according to the invention, the joint can be formed after the assembling of the faucet, and even after it has been fitted in the sink. In this manner, the pipe starting from the faucet passes easily even through a small fitting hole. The joint according to the invention is rotatory. A rotatory joint allows elimination of the torsional tension caused by the hose.

According to the present invention, we provide a pipe having a rotary joint for connecting a hose to the pipe, there being a flange formed at one end of the pipe and the joint comprising two retaining bushings with split circumferences and a flange at one end, fitted around the pipe, and an O-ring also fitted around the pipe and located between the flanges of the bushings, and a threaded member bearing on a flange of one of the bushings, the threaded member being provided with threads onto which the counterpart at the end of the hose can be screwed.

In the joint according to the invention, the flange on the copper pipe coming from the faucet, provides axial stability so that the entire joint is supported by the flange. The internal diameter of the threaded member is big enough to allow the pipe flange to pass through. The two retaining bushings are retained by the threaded member and have a split circumference in order to open up sufficiently so that they can be passed over the pipe flange. The surfaces of the retaining bushings in contact with the pipe are smooth, so that the friction between the pipe and the bushing is reduced during rotation. A seal between the threaded member and the pipe is achieved by the O-ring.

The threaded member and the retaining bushings may be made of plastic, thus causing lower production costs than brass members.

A preferred embodiment of the invention is now described in further detail below by way of example with reference to the accompanying drawings, in which:-
FIGURE 1a shows a lateral cross-section of the retaining bushing and Figure 1b a top view of it; and
FIGURE 2 shows a pipe with a joint provided with two retaining bushings.

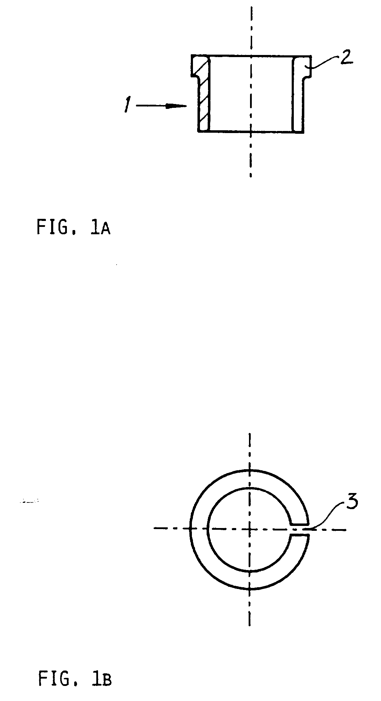

Referring to the drawings, a retaining bushing 1 has an outwardly extending flange 2 at one edge or end, the other edge or end being straight. As can be seen from Figure 1b, the circumference of the retaining bushing 1 is split at 3. Owing to the split 3, the retaining bushing 1 may be slightly opened, in order to make it pass over a flange 5 in the faucet outlet pipe, and to fit it around the pipe. The inner diameter of the bushing equals the outer diameter of the pipe or is slightly greater than it. The inner surface of the bushing is smooth, thus reducing the friction that prevents its rotation about the pipe.

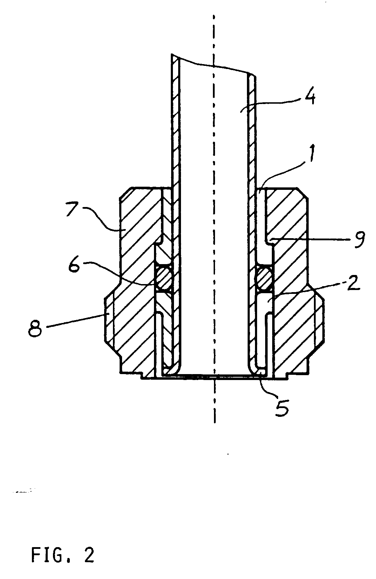

Referring now to the joint shown in Figure 2, the flange 5 retaining the entire joint axially is provided at the end of the pipe 4 coming from the faucet. Retaining bushings 1 are fitted around the pipe, and an O-ring 6 is fitted between the bushings to provide a seal between the pipe and the joining piece. Outer threads 8 are formed on a threaded member 7 of the joint, onto which the counterpart at the end of the hose can be screwed.

The retaining bushings 1 are retained by the threaded member 7 so that the lower bushing bears on the flange 5 formed at the end of the pipe 4. An O-ring 6 has been fitted against the flange 2 of the lower bushing to provide a seal, and after this a second retaining bushing 1 is fitted against the O-ring. A step 9 is formed in the bore of the threaded member 7 bearing on the flange 2 formed at the edge of the second bushing. The step separates a first portion of smaller diameter from a second portion of larger diameter of the bore of the threaded member 7.

The threaded member has to be appropriately dimensioned by widening or narrowing the recess 9 longitudinally to accommodate the bushings 1 and O-ring 6.

As can be seen from Figure 2, the diameter of the smaller portion of the threaded member 7 is just large enough to enable the member 7 to be passed over the pipe flange 5, prior to locating each bushing 1 and the O-ring 6 in position. This allows the joint to be formed in a more simple manner than is the case with prior art joints.

It will of course be understood that the present invention has been described above purely by way of example, and modifications of detail can be made within the scope of the claims.

## Claims

1. A pipe (4) having a rotary joint for connecting a hose to the pipe (4), there being a flange (5) formed at one end of the pipe (4) and the joint comprising two retaining bushings (1) with split circumferences and a flange (2) at one end, fitted around the pipe (4), and an O-ring (6) also fitted around the pipe (4) and located between the flanges (2) of the bushings (1), and a threaded member (7) bearing on a flange (2) of one of the bushings (1), the threaded member (7) being provided with threads (8) onto which the counterpart at the end of the hose can be screwed.

2. A pipe according to claim 1, wherein the threaded member (7) and the retaining bushings (1) are made of plastic.

## Patentansprüche

1. Rohr (4) mit einer drehbaren Verbindung zum Anschluß eines Schlauchs an das Rohr (4), wobei ein Flansch (5) an einem Ende des Rohrs (4) ausgebildet ist und die Verbindung zwei Rückhaltebuchsen (1) mit aufgeteilten Umfängen und einem Flansch (2) an einem Ende aufweist, die um das Rohr (4) aufgepaßt sind, und wobei auch ein O-Ring (6) um das Rohr (4) eingepaßt ist und zwischen den Flanschen (2) der Buchsen (1) angeordnet ist, wobei ein mit einem Gewinde versehenes Element (7) auf einem Flansch (2) von einer der Buchsen (1) lagert, wobei das mit einem Gewinde versehene Element (7) mit Gewinden (8) versehen ist, auf die das Gegenstück am Ende des Schlauches geschraubt werden kann.

2. Rohr nach Anspruch 1, **dadurch gekennzeichnet, daß** das mit einem Gewinde versehene Element (7) und die Rückhaltebuchsen (1) aus Plastik hergestellt sind.

## Revendications

1. Tuyau rigide (4) ayant un raccord rotatif pour connecter un tuyau souple au tuyau rigide (4), une bride (5) étant formée à une extrémité du tuyau rigide (4) et le raccord comprenant deux douilles de maintien (1) avec des circonférences fendues et une bride (2) au niveau d'une extrémité, montée autour du tuyau rigide (4), et un joint torique (6), également monté autour du tuyau rigide (4) et situé entre les brides (2) des douilles (1), et un organe fileté (7) portant sur une bride (2) de l'une des douilles (1), l'organe fileté (7) étant pourvu de filetages (8) sur lesquels peut être vissée la contre-partie au niveau de l'extrémité du tuyau souple.

2. Tuyau rigide selon la revendication 1, dans lequel l'organe fileté (7) et les douilles de maintien (1) sont en matière plastique.
